# EUROPÄISCHE PATENTSCHRIFT

(11) **EP 2 934 970 B1**
(45) Veröffentlichungstag und Bekanntmachung des Hinweises auf die Patenterteilung: **30.11.2016**
(21) Anmeldenummer: 13805877.1
(22) Anmeldetag: 16.12.2013
(51) Int. Cl.: B60T 8/48

(54) **HYDRAULISCHES BREMSSYSTEM MIT EINEM ZWISCHENSPEICHER**
HYDRAULIC BRAKING SYSTEM HAVING A TEMPORARY STORE
SYSTÈME DE FREINAGE HYDRAULIQUE POURVU D'UN RÉSERVOIR INTERMÉDIAIRE

(30) Priorität: 19.12.2012 DE 102012024950
(43) Veröffentlichungstag der Anmeldung: 28.10.2015
(73) Patentinhaber: Lucas Automotive GmbH, 56070 Koblenz (DE)
(72) Erfinder: MARX, Andreas, 56244 Hartenfels (DE)
(74) Vertreter: Schmidt, Steffen J.
(86) Internationale Anmeldenummer: PCT/EP2013/076684
(87) Internationale Veröffentlichungsnummer: WO 2014/095709

(56) Entgegenhaltungen:
- EP-A1- 0 668 199
- DE-A1- 19 529 895
- DE-A1-102011 121 748
- GB-A- 2 296 056

## Beschreibung

### Technisches Gebiet

Hier wird ein Fahrzeugbremssystem für ein Landfahrzeug beschrieben, wobei das Fahrzeugbremssystem einen Zwischenspeicher zur Aufnahme von Hydraulikfluid umfasst. Der Zwischenspeicher nimmt in einem unbetätigten Ausgangszustand des Fahrzeugbremssystems ein Hydraulikfluid-Reservevolumen auf.

### Hintergrund

Fahrzeuge weisen in der Regel eine Fahrzeugbremsanlage auf, in welcher zum Bremsen ein Hydraulikfluid in die Radbremsen des Fahrzeugs geleitet wird. Zunehmend haben Fahrzeuge aber auch eine elektrische Maschine die dazu dient, das Fahrzeug zumindest unterstützend zu einem Verbrennungsmotor anzutreiben. Die elektrische Maschine bietet gegenüber einem Verbrennungsmotor den Vorteil, dass sie generatorisch betrieben werden kann. Beim generatorischen Betrieb der elektrischen Maschine wird die Bewegungsenergie des Fahrzeugs in elektrische Energie umgewandelt. Die Energierückgewinnung aus der Bewegungsenergie des Landfahrzeugs mittels der elektrischen Maschine kann dabei als Rekuperation bezeichnet werden.

Während im Normalbremsbetrieb Bewegungsenergie des Fahrzeugs aufgrund des reibschlüssigen Zusammenwirkens von Bremsbacken und Bremsscheiben an den Radbremsen in Wärmeenergie umgewandelt wird, wird bei der Rekuperation die Bewegungsenergie des Fahrzeugs genutzt, um die Fahrzeugbatterie aufzuladen. Die in der aufgeladenen Batterie gespeicherte chemische Energie findet dann in einem motorischen Betrieb der elektrischen Maschine wieder Verwendung zum Antrieb des Landfahrzeugs. Das Abbremsen des Fahrzeugs erfolgt mittels der elektrischen Maschine, so dass die Radbremsen unbetätigt bleiben können. In der Regel ist dies sogar erwünscht, da jegliche an den Radbremsen in Wärmeenergie umgewandelte Bewegungsenergie nicht mehr zum Aufladen der Fahrzeugbatterie zur Verfügung steht.

Im Vergleich zu einem rein hydraulischen Bremsvorgang dauert der Aufbau des generatorischen Bremsmoments jedoch häufig etwas länger. Auch geht die Bremswirkung der generatorisch betriebenen elektrischen Maschine bei niedrigen Geschwindigkeiten zurück. Daher kann die elektrische Maschine das Fahrzeug in der Regel nicht bis zum Stillstand abbremsen und/oder das Fahrzeug sicher im Stillstand halten.

Daher besteht die Überlegung, dass auch bei einer Rekuperation zunächst ein hydraulisches Bremsmoment aufgebaut wird und dann das hydraulische Bremsmoment durch generatorisches Bremsmoment ersetzt wird. Ferner bestehen Überlegungen, beim Unterschreiten einer Mindestgeschwindigkeit, also am Ende der Rekuperation, hydraulisches Bremsmoment aufzubauen. Damit dem Fahrer weiterhin das gewohnte Bremsgefühl vermittelt werden kann, also keine unerwarteten Pedalrückwirkungen auftreten und es nicht erforderlich ist, dass der Fahrer in der Endphase der Rekuperation das Bremspedal erneut betätigen muss, sind bisher eine Vielzahl von Ventilschaltvorgängen und das Ansteuern einer Hydraulikpumpe erforderlich. Wegen der dabei entstehenden Geräusche können insbesondere die Schaltvorgänge der Ventilanordnungen vom Fahrer als störend wahrgenommen werden.

Es wäre daher wünschenswert, diese Funktion mit möglichst geringer Geräuschentwicklung zu implementieren. Ferner wäre es wünschenswert, dass das Fahrzeugbremssystem für rein hydraulisch gebremste Fahrzeuge und für generatorisch gebremste Fahrzeuge geeignet ist, oder zumindest relativ einfach an die jeweiligen Anforderungen angepasst werden kann.

EP 0 668 199 A1 offenbart ein Bremsfiüssigkeits-Drucksteuergerät.

### Zugrunde liegende Aufgabe

Es ist daher Aufgabe, ein einfach aufgebautes und kostengünstig herstellbares Fahrzeugbremssystem bereitzustellen, das hydraulische und generatorische Bremsvorgänge ermöglicht. Zudem soll das Bremssystem dem Fahrer ein komfortables Bremsverhalten und Bremsgefühl vermitteln, wobei die durch das Bremssystem verursachte Geräuschentwicklung möglichst gering sein sollte.

### Vorgeschlagene Lösung

Zur Lösung der Aufgabe wird ein hydraulisches Bremssystem für ein Landfahrzeug vorgeschlagen. Das hydraulische Bremssystem umfasst zumindest eine einem Rad des Landfahrzeugs zugeordnete Radbremse; einen Hauptbremszylinder, der hydraulisch mit der zumindest einen Radbremse verbunden ist, wobei der Hauptbremszylinder dazu eingerichtet ist, bei einer Betätigung des Bremssystems durch den Fahrer Hydraulikfluid in die zumindest eine Radbremse zu verschieben; eine Pumpe, deren Ausgang hydraulisch mit der zumindest einen Radbremse verbunden ist und die Pumpe dazu eingerichtet ist, Hydraulikfluid in die zumindest eine Radbremse zu verschieben; eine Vielzahl von Ventilanordnungen; eine Steuereinheit, die dazu eingerichtet ist, die Pumpe und die Vielzahl der Ventilanordnungen anzusteuern; und einen Zwischenspeicher. Der Zwischenspeicher ist hydraulisch mit der zumindest einen Radbremse und einem Eingang der Pumpe verbunden, umfasst ein Rückstellelement und ist dazu eingerichtet, während eines Ruhezustands des Bremssystems ein Hydraulikfluid-Reservevolumen aufzunehmen, und der Pumpe das aufgenommene Hydraulikfluid-Reservevolumen während eines Betätigungszustands zum Verschieben in die zumindest eine Radbremse bereitzustellen.

Gemäß einem weiteren Aspekt wird zur Lösung der Aufgabe ein Hydraulikaggregat vorgeschlagen. Diesem Hydraulikaggregat sind die vorstehend definierte Pumpe, die Ventilanordnungen und der Zwischenspeicher zugeordnet.

Bei der vorgeschlagenen Lösung befindet sich das Hydraulikfluid-Reservevolumen bereits während des Ruhezustands, also einem Zustand in dem das Bremssystem unbetätigt ist, im Zwischenspeicher. Daher kann in der Endphase einer Rekuperation oder nach einer Rekuperation, also einem Verzögerungsvorgang, bei dem eine elektrische Maschine kinetische Energie des Landfahrzeugs in elektrische Energie umwandelt, ein Teil des Hydraulikfluid-Reservevolumens aus dem Zwischenspeicher in die zumindest eine Radbremsen verschoben werden. Das aus dem Zwischenspeicher in die zumindest eine Radbremse verschobene Hydraulikfluidvolumen kann so bemessen sein, dass ein Mindest-Bremsdruck in der zumindest einen Radbremse aufgebaut werden kann. Der Mindest-Bremsdruck wiederum kann so bemessen sein, dass das Fahrzeug sicher bis in den Stillstand abgebremst und/oder sicher im Stillstand gehalten werden kann. Selbst wenn das während des Betätigungszustands in die Radbremsen und von dort in den Zwischenspeicher verschobene Hydraulikfluid-Volumen nicht ausreichen würde, um das Fahrzeug abzubremsen und/oder im Stillstand zu halten, kann die Pumpe ein ausreichendes Hydraulikfluid-Volumen in die Radbremsen fördern. Dadurch kann der Aufbau des hydraulischen Bremsmoments in der Endphase der Rekuperation von dem während der Rekuperation in die Radbremsen und/oder aus den Radbremsen in den Zwischenspeicher verschobenen Hydraulikfluidvolumen entkoppelt werden. Da das Hydraulikfluid-Reservevolumen im Zwischenspeicher bereitgestellt wird, kann der Aufbau des hydraulischen Bremsmoments schneller erfolgen, als wenn die Pumpe Hydraulikfluid aus dem Hauptbremszylinder oder dem Bremsflüssigkeitsbehälter ansaugen würde. Zudem ist es zum Aufbau des hydraulischen Bremsmoments nicht notwendig, ein Versorgungsventil des Bremssystems zu öffnen, so dass die Geräuschentwicklung reduziert werden kann.

### Ausgestaltung und Eigenschaften

Die Steuereinheit kann dazu eingerichtet sein, während einer ersten Phase des Betätigungszustands der Vielzahl der Ventilanordnungen Schaltzustände vorzugeben, wobei die vorgegebenen Schaltzustände der Ventilanordnungen bewirken, dass ein erstes Hydraulikfluidvolumen aus der zumindest einen Radbremse in den Zwischenspeicher verschoben wird. Das erste Hydraulikfluidvolumen kann einem Hydraulikfluidvolumen entsprechend, das vom Fahrer durch die Betätigung des Bremspedals aus dem Hauptbremszylinder in die Radbremsen verschoben worden ist. Das erste Hydraulikfluidvolumen kann aus den Radbremsen in den Zwischenspeicher verschoben werden, um ein hydraulisches Bremsmoment, zum Beispiel während einer Rekuperation, auszublenden. Die erste Phase des Betätigungszustands kann zum Beispiel die Anfangsphase einer Rekuperation sein.

Die Steuereinheit kann dazu eingerichtet sein, während einer zweiten Phase des Betätigungszustands der Vielzahl der Ventilanordnungen Schaltzustände und der Pumpe ein Ansteuersignal vorzugeben, wobei das Ansteuersignal und die Schaltzustände bewirken, dass ein zweites Hydraulikfluidvolumen aus dem Zwischenspeicher in die zumindest eine Radbremse verschoben wird. Das zweite Hydraulikfluidvolumen kann zumindest einen Teil des Hydraulikfluid-Reservevolumens umfassen. Die zweite Phase des Betätigungszustands kann zum Beispiel die Endphase einer Rekuperation sein. Die Summe aus erstem Hydraulikfluidvolumen und zweitem Hydraulikfluidvolumen kann einem Hydraulikfluidvolumen entsprechen, das benötigt wird, um einen Mindest-Bremsdruck in der zumindest einen Radbremse aufzubauen. Das erste Hydraulikfluidvolumen kann dabei auch Null sein.

Das zweite Hydraulikfluidvolumen kann größer als das erste Hydraulikfluidvolumen sein.

Die Steuereinheit kann dazu eingerichtet sein, während des Betätigungszustands eine zwischen der zumindest einen Radbremse und dem Hauptbremszylinder angeordnete erste Ventilanordnung derart anzusteuern, dass die erste Ventilanordnung eine Volumenverschiebung aus dem Hauptbremszylinder in die zumindest eine Radbremse drosselt. Die Steuereinheit kann zum Beispiel die erste Ventilanordnung teilweise ansteuern. Die erste Ventilanordnung kann ein Isolationsventil des Bremssystems sein. Die Steuereinheit kann die Drosselwirkung der Ventilanordnung so vorgeben, dass dem Fahrer über das Bremspedal eine Pedalrückwirkung bereitgestellt wird, die einer Pedalrückwirkung bei einem rein hydraulischen Bremsvorgang angenähert ist.

Das Rückstellelement kann einen den Zwischenspeicher begrenzenden Kolben und eine auf den Kolben wirkende erste Feder umfassen. Die erste Feder kann an dem Kolben und einer Wand des Zwischenspeichers befestigt sein. Die am Kolben und der Wand des Zwischenspeichers befestigte erste Feder kann eine in zwei unterschiedliche Richtungen wirkende Rückstellkraft auf den Kolben ausüben. Die zwei unterschiedlichen Richtungen können im Wesentlichen entgegengesetzt zueinander sein.

Das Rückstellelement kann ferner eine zweite Feder umfassen. Die erste und die zweite Feder können derart angeordnet sein, dass die erste Feder eine in eine erste Richtung gerichtete Rückstellkraft bewirkt und die zweite Feder eine in eine zweite Richtung gerichtete Rückstellkraft bewirkt. Die erste und die zweite Richtung können im Wesentlichen entgegengesetzt zueinander sein.

Die Rückstellkraft kann bewirken, dass während des Ruhezustands des Bremssystems oder wenn das hydraulische Bremsmoment abgebaut wird, Hydraulikfluid aus der zumindest einen Radbremse und/oder dem Hauptbremszylinder in den Zwischenspeicher fließt.

Das Hydraulikfluid-Reservevolumen kann größer als 0,5 cm³ sein. Zum Beispiel kann das Hydraulikfluid Reserve-Volumen in einem Bereich zwischen 2 cm³ und 0,5 cm³ liegen. In einem speziellen Ausführungsbeispiel kann das Hydraulikfluid-Reservevolumen 1 cm³ sein. Die vorstehenden Angaben sind als Beispiele zu verstehen; in konkreten Anwendungen können die jeweiligen Werte hiervon auch abweichen.

### Kurzbeschreibung der Zeichnungen

Weitere Ziele, Merkmale, Vorteile und Anwendungsmöglichkeiten ergeben sich aus der nachfolgenden Beschreibung von nicht einschränkend zu verstehenden Ausführungsbeispielen und den zugehörigen Zeichnungen.
Fig. 1 zeigt eine schematische Schnittdarstellung eines ersten Ausführungsbeispiels eines Zwischenspeichers;
Fig. 2 zeigt eine schematische Schnittdarstellung eines zweiten Ausführungsbeispiels eines Zwischenspeichers;
Fig. 3 zeigt einen schematischen Hydraulikschaltplan eines Bremssystems;
Fig. 4 zeigt eine schematische Ansicht eines Hydraulikaggregats.

### Detaillierte Beschreibung von Ausführungsbeispielen

Im Folgenden werden Ausführungsbeispiele eines hydraulischen Bremssystems eines Landfahrzeugs beschrieben. Übereinstimmende Elemente sind dabei in den Figuren mit denselben Bezugszeichen bezeichnet.

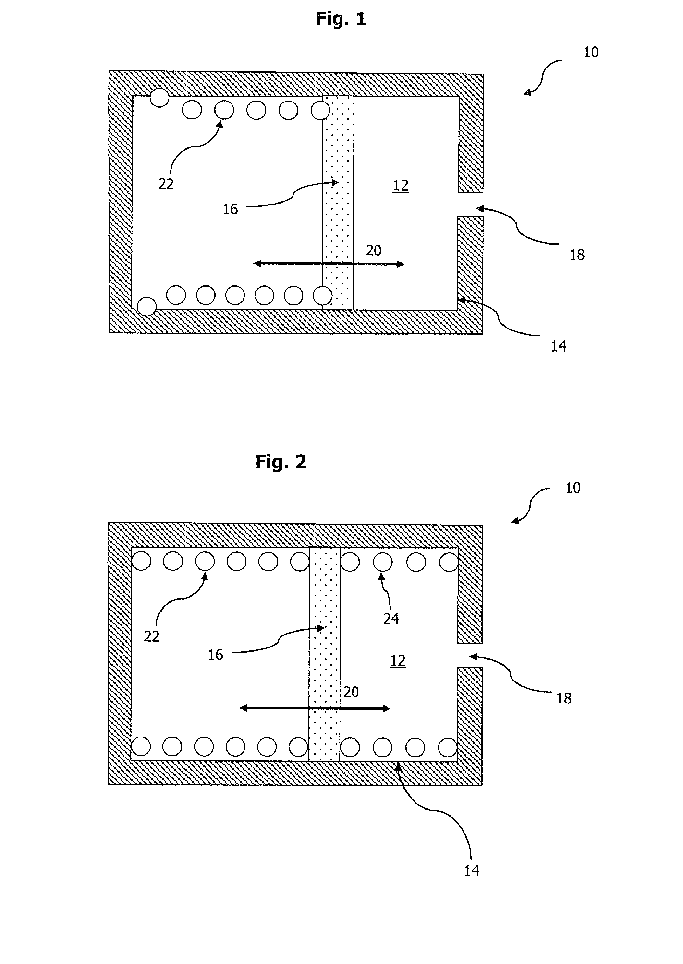

Fig. 1 zeigt einen schematischen Querschnitt eines ersten Ausführungsbeispiels eines Zwischenspeichers 10. Der Zwischenspeicher 10 umfasst eine Speicherkammer 12. Die Speicherkammer 12 ist zur Aufnahme von Hydraulikfluid des Bremssystems vorgesehen. Die Speicherkammer 12 wird durch die Wand 14 und den Kolben 16 begrenzt. In der Wand 14 ist eine Öffnung 18 vorgesehen, die die Speicherkammer 12 des Zwischenspeichers 10 mit Hydraulikfluidleitungen des Bremssystems verbindet. Die Form der in Fig. 1 dargestellten Speicherkammer 12 ist im Wesentlichen zylinderförmig. Es können jedoch auch andere Formen für Zwischenspeicher 10 und Speicherkammer 12 vorgesehen sein. Der Kolben 16 ist verschiebbar, kann also entlang der Wand 14 verschoben werden. Dies ist durch den Doppelpfeil 20 angedeutet.

Eine erste Feder 22 stützt den Kolben 16 ab. Die in Fig. 1 dargestellte erste Feder 22 ist an dem Kolben 16 und der Wand 14 befestigt. Dazu ist ein Ende der ersten Feder 22 an dem Kolben 16 und ein anderes Ende der ersten Feder 22 an der Wand 14 befestigt. Dies ist in Fig. 1 dadurch angedeutet, dass die äußeren Windungen der ersten Feder 22 in die Wand 14 und den Kolben 16 ragen. In der Darstellung der Fig. 1 ist die erste Feder 22 an der von der Speicherkammer 12 abgewandten Seite des Kolbens 16 angeordnet. Es ist aber auch möglich, dass die erste Feder 22 in der Speicherkammer 12 angeordnet ist. In dem in Fig. 1 dargestellten Ausführungsbeispiel bilden der Kolben 16 und die erste Feder 22 ein Rückstellelement.

In Fig. 1 ist ein Ruhezustand dargestellt. Im Ruhezustand befindet sich der Kolben 16 in seiner Ruheposition. Ein Verschieben des Kolbens 16 nach links, also ein eine Volumenvergrößerung der Speicherkammer 12 bewirkendes Verschieben des Kolbens 16 spannt die erste Feder 22 vor. Ein Verschieben des Kolbens 16 nach rechts, also ein eine Volumenverkleinerung der Speicherkammer 12 bewirkendes Verschieben des Kolbens 16 verringert die Spannung der ersten Feder 22. Im in Fig. 1 gezeigten Ruhezustand ist die Feder 22 spannungsfrei. Die gedehnte oder gespannte erste Feder 22 übt auf den Kolben 16 eine Rückstellkraft aus. Die Rückstellkraft bewirkt, dass der Kolben 16 nach einer Auslenkung infolge einer Volumenaufnahme oder Volumenabgabe in seine Ruheposition zurückkehrt.

Wenn sich der Kolben 16 in der Ruheposition befindet, ist in der Speicherkammer 12 ein Hydraulikfluid-Reservevolumen V_{R} enthalten. Die Ruheposition des Kolbens 16 kann durch die Länge der ersten Feder 22 und dem im Ruhezustand des Bremssystems im Zwischenspeicher 10 anliegenden Hydraulikdruck bestimmt werden. Die Länge der ersten Feder 22 kann so gewählt werden, dass das Hydraulikfluid-Reservevolumen V_{R} ausreicht, um in zumindest einer Radbremse einen Mindest-Bremsdruck zu erzeugen. Der Mindest-Bremsdruck wiederum kann so gewählt sein, dass dadurch das Landfahrzeug bis zum Stillstand gebremst werden kann und/oder sicher im Stillstand gehalten werden kann. Somit kann das Hydraulikfluid-Reservevolumen V_{R} von der Größe von zumindest einer Radbremse abhängen. Das Hydraulikfluid-Reservevolumen V_{R} kann je nach Anzahl und Größe der vorgesehenen Radbremsen variieren und zum Beispiel mindestens 0,5 cm³ sein. In einem speziellen Ausführungsbeispiel kann das Hydraulikfluid-Reservevolumen 1 cm³ sein. Ferner kann das Hydraulikfluid-Reservevolumen zum Beispiel 10-25% des Gesamtaufnahmevolumens des Zwischenspeichers 10 sein. Es ist ersichtlich, dass bei Ausführungsbeispielen in denen mehrere Zwischenspeicher 10 vorgesehen sind, die Zahlenwerte für die einzelnen Zwischenspeicher 10 abweichen können. Wenn zum Beispiel in einem Bremskreis zwei parallel zueinander angeordnete Teil-Zwischenspeicher vorgesehen sind, beziehen sich die Werte vielmehr auf das Gesamtaufnahmevolumen beider Teil-Zwischenspeicher und die Summe des in beiden Teil-Zwischenspeichern aufgenommenen Hydraulikfluid-Reservevolumens V_{R}.

Durch die Rückstellkraft des Rückstellelements fließt während des Ruhezustands des Bremssystems Hydraulikfluid in den Zwischenspeicher 10. Sollte zum Beispiel nach einem Betätigungszustand des Bremssystems der Zwischenspeicher 10 vollständig entleert sein, bewirkt die Rückstellkraft, dass der Kolben 16 zurück in die Ruheposition verschoben wird. Dies bewirkt, im Vergleich zum Druckniveau im übrigen Bremssystem, einen Unterdruck im Zwischenspeicher 10. Infolge des Unterdrucks im Zwischenspeicher 10 fließt solange Hydraulikfluid in den Zwischenspeicher 10 bis der Gleichgewichtszustand wieder hergestellt ist. Somit wird durch das Rückstellelement sichergestellt, dass bei der nächsten Betätigung des Bremssystems das Hydraulikfluid-Reservevolumen V_{R} bereits in dem Zwischenspeicher 10 enthalten ist.

In Fig. 2 ist ein Querschnitt eines zweiten Ausführungsbeispiels eines Zwischenspeichers 10 dargestellt. Der grundsätzliche Aufbau des in Fig. 2 dargestellten Zwischenspeichers ähnelt dem in Fig. 1 dargestellten Zwischenspeicher. Allerdings unterscheiden sich die Rückstellelemente der Zwischenspeicher 10. Das Rückstellelement des in Fig. 2 dargestellten Zwischenspeichers 10 umfasst einen Kolben 16, eine erste Feder 22 und eine zweite Feder 24. Die erste und die zweite Feder 22, 24 sind auf gegenüberliegenden Seiten des Kolbens 16 angeordnet. Bei der Darstellung der Fig. 2 ist zum Beispiel die zweite Feder 24 in der Speicherkammer 12 angeordnet und die erste Feder 22 auf der der Speicherkammer 12 gegenüberliegenden Seite des Kolbens 16 angeordnet.

Bei dem in Fig. 2 dargestellten Ausführungsbeispiel ist es nicht erforderlich, dass die erste Feder 22 oder die zweite Feder 24 an dem Kolben oder der Wand 14 befestigt sind. Vielmehr können die Federkonstante und/oder die Länge der ersten und der zweiten Feder 22, 24 aufeinander abgestimmt werden, um eine gewünschte Ruheposition des Kolbens 16 zu erhalten. Im Ruhezustand sind die erste und zweite Feder 22, 24 ungefähr im Gleichgewicht. Allerdings wird der Gleichgewichtszustand der ersten und zweiten Feder 22, 24 durch den Druck des im Ruhezustand in der Speicherkammer 12 aufgenommenen Hydraulikfluids beeinflusst.

Der in den Fig. 1 oder 2 dargestellte Zwischenspeicher 10 kann zum Beispiel ein Niederdruck-Zwischenspeicher sein. Der Druck des Hydraulikfluids im Zwischenspeicher 10 kann zum Beispiel ungefähr 2 bar sein. Die Federkennlinien der ersten und zweiten Feder 22, 24 können dabei so gewählt sein, dass sich der Druck des im Zwischenspeicher 10 aufgenommenen Hydraulikfluids beim Füllen des Zwischenspeichers 10 nur geringfügig erhöht.

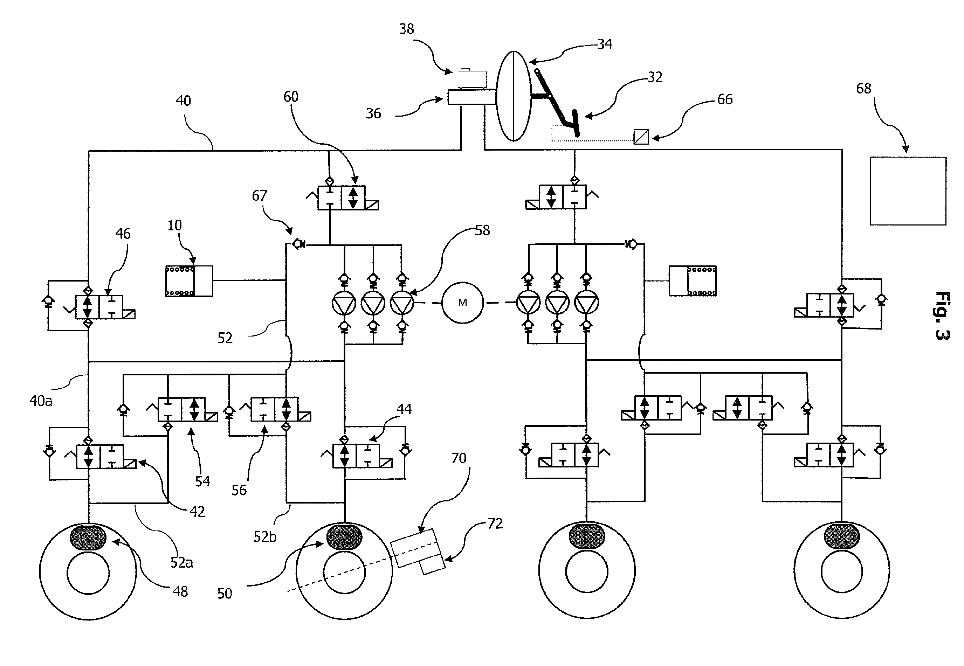

Die Fig. 3 ist ein schematischer Hydraulikschaltplan eines Bremssystems. Dieses hydraulische Bremssystem umfasst den in Verbindung mit den Fig. 1 oder Fig. 2 beschriebenen Zwischenspeicher 10.

Das Bremssystem ermöglicht Rekuperation, also einen Verzögerungsvorgang bei dem eine elektrische Maschine des Landfahrzeugs die Bewegungsenergie des Landfahrzeugs in elektrische Energie umwandelt. Das Bremssystem weist zwei hydraulisch voneinander getrennte Bremskreise auf, wobei im Folgenden das Bremssystem in Bezug auf einen Bremskreis erläutert wird. Das für die Komponenten dieses Bremskreises Gesagte gilt in entsprechender Weise für den anderen Bremskreis. Auch wenn im Folgenden lediglich ein Bremskreis betrachtet wird, bestehen Wechselwirkungen zwischen den beiden Bremskreisen. So erfolgt über einen Hauptbremszylinder des Landfahrzeugs ein Druckausgleich, so dass in beiden Bremskreisen in der Regel der gleiche Bremsdruck anliegt.

Das in Fig. 3 gezeigte Bremssystem umfasst ein Bremspedal 32. Das Bremspedal 32 ist über einen Bremskraftverstärker 34 mit einem Hauptbremszylinder 36 verbunden. Der Hauptbremszylinder 36 ist mit einem Bremsflüssigkeitsbehälter 38 verbunden, in welchem Hydraulikfluid vorrätig gehalten wird.

Über Zuführleitungen 40, 40a ist der Hauptbremszylinder 36 mit einer ersten Radbremse 48 und einer zweiten Radbremse 50 verbunden. In der Zuführleitung 40a zur ersten Radbremse 48 ist ein erstes Isolationsventil 42 vorgesehen, wobei das erste Isolationsventil 42 dazu eingerichtet ist, die Zuführleitung 40a zur ersten Radbremse wahlweise zu sperren. In der Zuführleitung zur zweiten Radbremse 50 ist ein zweites Isolationsventil 44 vorgesehen, wobei das zweite Isolationsventil 44 dazu eingerichtet ist, die Zuführleitung zur zweiten Radbremse 50 wahlweise zu sperren. Zwischen dem Hauptbremszylinder 36 und den Radbremsen ist in der Zuführleitung 40 ein drittes Isolationsventil 46 angeordnet, dass dazu eingerichtet ist, die Zuführleitung 40 zu sperren. Somit isoliert das dritte Isolationsventil 46 im geschlossenen Schaltzustand den Hauptbremszylinder 36 von den Radbremsen 48, 50. Von der ersten und zweiten Radbremse 48, 50 führen Rückführleitungen 52, 52a, 52b zu einem Eingang einer Pumpe 58. In der Rückführleitung 52a von der ersten Radbremse 48 ist ein erstes Druckabbauventil 54 angeordnet, wobei das erste Druckabbauventil 54 dazu eingerichtet ist, die Rückführleitung 52a von der ersten Radbremse 48 wahlweise zu sperren. In der Rückführleitung 52b von der zweiten Radbremse 50 ist ein zweites Druckabbauventil 56 angeordnet, wobei das zweite Druckabbauventil 56 dazu eingerichtet ist, die Rückführleitung 52b von der zweiten Radbremse 50 wahlweise zu sperren.

Der Zwischenspeicher 10 ist mit der Rückführleitung 52 verbunden und zur vorübergehenden Aufnahme von aus den Radbremsen 48, 50 abfließenden Hydraulikfluid eingerichtet. In der Rückführleitung 52 ist zwischen dem Zwischenspeicher 10 und dem Eingang der Pumpe 58 ein Sperrventil 67 vorgesehen. Weitere zur Druckbegrenzung dienende Sperrventile sind parallel zu den Isolationsventilen 42, 44, 46 und den Druckabbauventilen 54, 56 vorgesehen, um diese, wenn der auf einer Seite der Sperrventile anliegende Druck einen vorgegebenen Wert übersteigt, zu überbrücken.

Die Pumpe 58 ist dazu eingerichtet, Hydraulikfluid in die Radbremsen 48, 50 zu fördern. Dazu ist der Ausgang der Pumpe 58 mit der Zuführleitung 40 verbunden.
Der Eingang der Pumpe 58 ist mit einem Versorgungsventil 60 verbunden, so dass der Eingang der Pumpe 58 durch das Versorgungsventil 60 mit dem Bremsflüssigkeitsbehälter 38 verbindbar ist. Durch Öffnen des Versorgungsventils 60 kann die Pumpe 58 Hydraulikfluid aus dem Bremsflüssigkeitsbehälter 38 ansaugen. Die Pumpe 58 kann eine Radialkolbenpumpe sein, deren Förderleistung variabel ist, wobei die in Fig. 3 dargestellte Pumpe eine Radialkolbenpumpe mit sechs Kolben ist.

Die Isolationsventile 42, 44, 46, Druckabbauventile 54, 56 und das Versorgungsventil 60 können zum Beispiel elektromagnetisch betätigbare 2/2-Wege-Ventile sein. Die Isolationsventile 42, 44, 46 sind in Normalstellung geöffnete Ventilanordnungen, die in Normalstellung (unbestromt) einen Durchfluss von Hydraulikfluid erlauben. Die Druckabbauventile 54, 56 und das Versorgungsventil 60 sind in Normalstellung geschlossene Ventilanordnungen, die in Normalstellung (unbestromt) einen Durchfluss von Hydraulikfluid verhindern. Jedoch ist es ebenso möglich, andere Ventile zum Erreichen der gleichen Wirkung zu verwenden.

Die Isolationsventile 42, 44, 46 und die Druckabbauventile 54, 56 können dazu eingerichtet sein, vollständig oder teilweise angesteuert zu werden. Bei einer teilweisen Ansteuerung der Ventile, reicht die Ansteuerenergie nicht aus, diese vollständig zu öffnen oder zu schließen. Der Ventile befinden sich daher in einem teilweise geöffneten Schaltzustand, in dem ein geringeres Hydraulikfluidvolumen über die Ventile abfließen kann, als im vollständig geöffneten Schaltzustand. Somit drosseln die Ventile im teilweise geöffneten Schaltzustand den Fluss des Hydraulikfluids.

Zudem ist in Fig. 3 eine Steuereinheit 68 dargestellt. Die Steuereinheit 68 ist mit den Isolationsventilen 42, 44, 46 den Druckabbauventilen 54, 56 und dem Versorgungsventil 60 elektrisch leitend verbunden und dazu eingerichtet, diesen Ventilen Schaltzustände vorzugeben. Dieses Ansteuern der Ventile kann auch als Öffnen bzw. Schließen der Ventile bezeichnet werden. Die Steuereinheit 68 ist auch mit einem Motor der Pumpe 58 elektrisch leitend verbunden und dazu eingerichtet, die Förderleistung der Pumpe 58 vorzugeben. So kann zum Beispiel die Steuereinheit 68 ein Pulsweitenmodulationssignal (PWM-Signal) ausgeben und dadurch die Drehzahl der Pumpe 58 vorgeben. Aus Gründen der Übersichtlichkeit sind die jeweiligen elektrischen Verbindungen nicht dargestellt.

Ferner ist an dem Bremspedal 32 ein Pedalwegsensor 66 zum Erfassen der Betätigung des Bremspedals 32 angeordnet, wobei der Pedalwegsensor 66 ein der Betätigung des Bremspedals 32 entsprechendes Signal an die Steuereinheit 68 abgibt. Das Bremssystem kann weitere Komponenten, wie zum Beispiel Sensoren, aufweisen, wobei diese zum Verständnis des vorliegenden Bremssystems nicht zwingend erforderlich sind und hier aus Gründen der Übersichtlichkeit nicht dargestellt sind.

In Fig. 3 ist eine elektrische Maschine 70 angedeutet. Die elektrische Maschine 70 ist dazu eingerichtet, während eines Verzögerungsvorgangs kinetische Energie des Landfahrzeugs in elektrische Energie umzuwandeln. Dabei erzeugt die elektrische Maschine 70 ein generatorisches Bremsmoment. Die elektrische Maschine 70 kann Teil des Antriebsstrangs des Landfahrzeugs sein. Ebenso kann die elektrische Maschine 70 ein Generator sein, der unabhängig vom Antriebsstrang mit den Rädern des Landfahrzeugs gekoppelt ist und speziell zur Umwandlung von kinetischer Energie in elektrische Energie vorgesehen ist. Der Betrieb der elektrischen Maschine 70 wird durch ein Steuergerät 72 gesteuert. Das Steuergerät 72 ist mit der Steuereinheit 68 des Bremssystems verbunden. Entsprechend können Daten und/oder Steuersignale zwischen dem Steuergerät 72 der elektrischen Maschine und der Steuereinheit 68 des Bremssystems ausgetauscht werden. Neben zwei separaten Steuerungen für Bremssystem und elektrische Maschine 70 kann auch ein eine gemeinsam Steuerung vorgesehen sein.

Nachstehend werden mit Bezug auf die Fig. 3 der Ruhezustand und der Betätigungszustand des Bremssystems erläutert. Im Ruhezustand des Bremssystems, also in einem Zustand in dem kein hydraulisches Bremsmoment anliegt, sind die ersten, zweiten und dritten Isolationsventile 42, 44, 46 und das erste und/oder zweite Druckabbauventil 54, 56 geöffnet. Während des Ruhezustands ist das Hydraulikfluid entspannt. Bedingt durch die Rückstellkraft des Rückstellelements fließt solange Hydraulikfluid aus dem Bremsflüssigkeitsbehälter 38 oder aus den Radbremsen 48, 50 in den Zwischenspeicher 10, bis sich der Kolben 16 in seiner Ruheposition befindet und der Zwischenspeicher 10 das Hydraulikfluid-Reservevolumen V_{R} aufnimmt.

In einem Betätigungszustand des Bremssystems also in einem Zustand in dem zumindest ein Rad das Landfahrzeug durch das Bremssystem verzögert wird oder verzögert werden soll, kann das Hydraulikfluid-Reservevolumen V_{R} von der Pumpe 38 angesaugt und in die Radbremsen 48, 50 gefördert werden. Dadurch kann schnell und effektiv Bremsdruck in den Radbremsen 48, 50 aufgebaut werden; selbst bei Bremsvorgängen in denen kein Hydraulikfluid von dem Hauptbremszylinder 36 in die Radbremsen 48, 50 und von dort in den Zwischenspeicher 10 verschoben wurde. Derartige Bremsvorgänge können zum Beispiel dann vorgesehen sein, wenn das Landfahrzeug - zum Beispiel während einer Kriechfahrt oder in einem Verkehrsstau - nur durch die elektrische Maschine 70 abgebremst wurde (rein rekuperativer Bremsvorgang) und das hydraulische Bremsmoment aufgebaut werden soll, um das Landfahrzeug sicher im Stillstand zu halten, oder wenn während eines rekuperativen Bremsvorgangs ein hydraulisches Bremsmoment aufgebaut werden soll, um einen Schlupfregelung auszuführen.

Das bereitgestellte Hydraulikfluid-Reservevolumens V_{R} kann auch dann verwendet werden, wenn während eines vom Fahrer initiierten Betätigungszustands des Bremssystems die Volumenverschiebung aus dem Hauptbremszylinder 36 in die Radbremsen 48, 50 gedrosselt wurde. Für die Drosselung dieser Volumenverschiebung kann die Steuereinheit 68 eines oder mehrere der Isolationsventile 42, 44, 46 teilweise ansteuern, so dass das angesteuerte Isolationsventil teilweise geschlossen ist. Die Drosselung der Volumenverschiebung bewirkt, dass weniger Hydraulikfluid in die Radbremsen 48, 50 verschoben wird, als erforderlich wäre, um einen Mindest-Bremsdruck aufzubauen. Während der Rekuperation kann das fehlende Hydraulikfluidvolumen zwar durch das generatorische Bremsmoment kompensiert werden, allerdings geht in der Endphase der Rekuperation das generatorische Bremsmoment zurück. Dieser Rückgang wird dann durch den Aufbau von hydraulischem Bremsmoment kompensiert. Das Hydraulikfluid-Reservevolumen V_{R} kann dabei teilweise oder vollständig in die Radbremsen 48, 50 gefördert werden, um dort das gewünschte hydraulische Bremsmoment aufzubauen.

Nachstehend wird dieser spezielle Betätigungszustand näher erläutert. Bei der Rekuperation wird ein Teil des Gesamtbremsmoments durch das Bremssystem und der andere Teil durch die elektrische Maschine 70 bereitgestellt. Damit der Ablauf des Bremsvorgangs für den Fahrer vorhersehbar bleibt und keine unerwarteten Effekte auftreten, sollte das aus hydraulischem Bremsmoment und generatorischem Bremsmoment zusammengesetzte Gesamtbremsmoment während des gesamten Bremsvorgangs dem durch die Betätigung des Bremspedals 32 vorgegebenen Bremswunsch des Fahrers entsprechen. Das Ersetzen des hydraulischen Bremsmoments durch ein generatorisches Bremsmoment und umgekehrt kann dabei als Blenden bezeichnet werden.

Bei dem in Fig. 3 dargestellten Bremssystem sind in der Anfangsphase der Rekuperation die Isolationsventile 42, 44, 46 geöffnet. Dadurch bewirkt die Betätigung des Bremspedals 32 durch den Fahrer eine Volumenverschiebung des Hydraulikfluids von dem Hauptbremszylinder 36 zu den Radbremsen 48, 50. Entsprechend baut der Fahrer durch die Betätigung des Bremspedals 32 in den Radbremsen 48, 50 einen Bremsdruck und somit ein hydraulisches Bremsmoment auf.

Während des Aufbaus des hydraulischen Bremsmoments durch den Fahrer, kann zumindest eines der Isolationsventile 42, 44, 46 teilweise angesteuert werden. Zum Beispiel kann das erste und zweite Isolationsventil 42, 44 oder das dritte Isolationsventil 46 angesteuert werden. Die teilweise Ansteuerung eines der Isolationsventile 42, 44, 46 bewirkt, dass die Volumenverschiebung aus dem Hauptbremszylinder 36 in die Radbremsen 48, 50 gedrosselt wird. Durch die Drosselung der Volumenverschiebung wird der Druckaufbau in den Radbremsen 48, 50 verzögert. Zudem ist der in den Radbremsen 48, 50 anliegende Bremsdruck geringer als der im Hauptbremszylinder 36 anliegende Bremsdruck. Damit kann bereits während des Aufbaus des Gesamtbremsmoments das hydraulische Bremsmoment vermindert aufgebaut werden.

Die Steuereinheit 68 kann dabei die Drosselwirkung des oder der Isolationsventile 42, 44, 46 derart vorgegeben, dass die Pedalrückwirkung infolge der Drosselwirkung weitestgehend der Pedalrückwirkung bei einem rein hydraulischen Bremsvorgang entspricht. Zum Beispiel kann das oder die Isolationsventile 42, 44, 46 derart angesteuert werden, dass eine zunehmende Auslenkung des Bremspedals 12 zu einem zunehmenden Schließen des oder der Isolationsventile 42, 44, 46 führt.

Aufgrund des durch die Drosselwirkung verursachten Wiederstands kann eine geeignete Gegenkraft am Bremspedal erzeugt werden. Somit wird dem Fahrer nicht das Gefühl vermittelt, er würde das Bremspedal 32 leer durchdrücken. Da aufgrund der Drosselwirkung weniger Hydraulikfluid in die Radbremsen verschoben wird, kann die sonst bei einer Rekuperation häufig auftretende Pedalwegverlängerung zumindest reduziert werden. Die Pedalrückwirkung des so gestalteten Bremssystems entspricht somit im Wesentlichen der Pedalrückwirkung konventioneller Bremssysteme oder ist dieser zumindest stark angenähert. Auf eine spezielle Pedalrückwirkungs-Simulationseinrichtung kann daher verzichtet werden. Zudem erfolgt das teilweise Schließen der Isolationsventile 42, 44 weitestgehend ohne Geräuschentwicklung.

Die Druckabbauventile 54, 56 können während des Aufbaus des Bremsmoments durch den Fahrer geöffnet oder geschlossen sein, je nachdem wie der Übergang von hydraulischen Bremsmoment zum generatorischen Bremsmoment implementiert ist. Zum Beispiel kann die in Dokument DE 10 2012 023 345.0 beschriebene Staudruckregelung vorgesehen sein, um das hydraulische Bremsmoment in Abhängigkeit von dem von der elektrischen Maschine 70 aufgebauten generatorischen Bremsmoment zu reduzieren.

Sobald das generatorische Bremsmoment von der elektrischen Maschine 70 aufgebaut wurde, kann das hydraulische Bremsmoment in der Regel vollständig ausgeblendet werden. Dazu fließt ein in den Radbremsen 48, 50 aufgenommenes erstes Hydraulikfluidvolumen V_{B} über die geöffneten Druckabbauventile 54, 56 in den Zwischenspeicher 10. Durch die Aufnahme des ersten Hydraulikfluidvolumens V_{B}, wird im Zwischenspeicher 10 das Rückstellelement gespannt. Zum Beispiel wird der in Fig. 1 dargestellte Kolben 16 nach links verschoben und dadurch die erste Feder 22 gespannt.

Um das Landfahrzeug bis zum Stillstand abzubremsen, wird häufig am Ende der Rekuperation wieder ein hydraulisches Bremsmoment aufgebaut. Dazu kann die Steuereinheit 68 die Pumpe 58 derart ansteuern, dass die Pumpe 58 Hydraulikfluid aus dem Zwischenspeicher 10 in die Radbremsen 48, 50 fördert. Sollte das aus den Radbremsen 48, 50 aufgenommene erste Hydraulikfluidvolumen V_{B} nicht ausreichen, um in den Radbremsen 48, 50 den vorstehend erwähnten Mindest-Bremsdruck aufzubauen, kann die Pumpe 58 zusätzlich das Hydraulikfluid-Reservevolumen V_{R} aus dem Zwischenspeicher 10 entnehmen und in die Radbremsen 48, 50 fördern. Dadurch wird der in Fig. 1 dargestellte Kolben 16 nach rechts verschoben und die erste Feder 22 gedehnt.

Zum Aufbau des hydraulischen Bremsmoments in den Radbremsen 48, 50 kann somit nicht nur das erste Hydraulikfluidvolumen V_{B} sondern auch das Hydraulikfluid-Reservevolumen V_{R} verwendet werden. Da das Hydraulikfluid-Reservevolumen V_{R} so bemessen sein kann, dass dieses bereits alleine ausreicht, um in den Radbremsen einen Mindest-Bremsdruck zu erzeugen, kann der Aufbau des hydraulischen Bremsmoments unabhängig von dem ersten Hydraulikfluidvolumen V_{B} erfolgen. Es ist also unerheblich wie viel Hydraulikfluid während des Bremsmomentaufbaus von dem Hauptbremszylinder 36 in die Radbremsen 48, 50 verschoben wurde. Vielmehr kann durch das Bereitstellen des Hydraulikfluid-Reservevolumen V_{R} der Aufbau des hydraulischen Bremsdrucks in der Endphase des Bremsvorganges von dem Aufbau des hydraulischen Bremsdrucks in einer Anfangsphase des Bremsvorgangs entkoppelt werden. Daher ist es auch bei Bremsvorgängen in denen kein oder nur wenig Hydraulikfluid in die Radbremsen verschoben wird nicht erforderlich, dass die Steuereinheit 68 in der Endphase der Rekuperation zum Beispiel das Versorgungsventil 60 öffnet und die Pumpe 58 Hydraulikfluid aus dem Bremsflüssigkeitsbehälter 38 ansaugt. Somit kann durch das Bereitgehaltene Hydraulikfluid-Reservevolumen V_{R} ein ausreichendes hydraulisches Bremsmoment erzeugt werden, ohne dass dazu Ventilschaltvorgänge erforderlich wären.

Durch die Drosselung der Volumenverschiebung kann dem Fahrer eine Gegenkraft am Bremspedal bereitgestellt werden und die Pedalwegverlängerung kann reduziert werden. Durch somit die Kurve "Pedalweg zu Pedalkraft" durch die Rekuperation allenfalls nur geringfügig verschoben wird, kann dem Fahrer ein gewohntes Pedalgefühl vermittelt werden kann. Da bereits beim Aufbau des Bremsmoments weniger Hydraulikfluid in die Radbremsen 48, 50 verschoben wird, kann ein größerer Anteil des Gesamtbremsmoments durch das generatorische Bremsmoment übernommen werden, so dass die Rekuperationsleistung erhöht werden kann. Zudem kann durch den speziellen Aufbau des Zwischenspeichers 10, der während einer Rekuperation im Bremssystem anliegende Restdruck reduziert werden. Da der Zwischenspeicher 10 bereits im Ruhezustand das Hydraulikfluid-Reservevolumen V_{R} aufnimmt, erhöht sich der Restdruck nur soweit, wie es zur Aufnahme des ersten Hydraulikfluidvolumens V_{B} erforderlich ist. Entsprechend muss die Feder weniger stark gespannt werden.

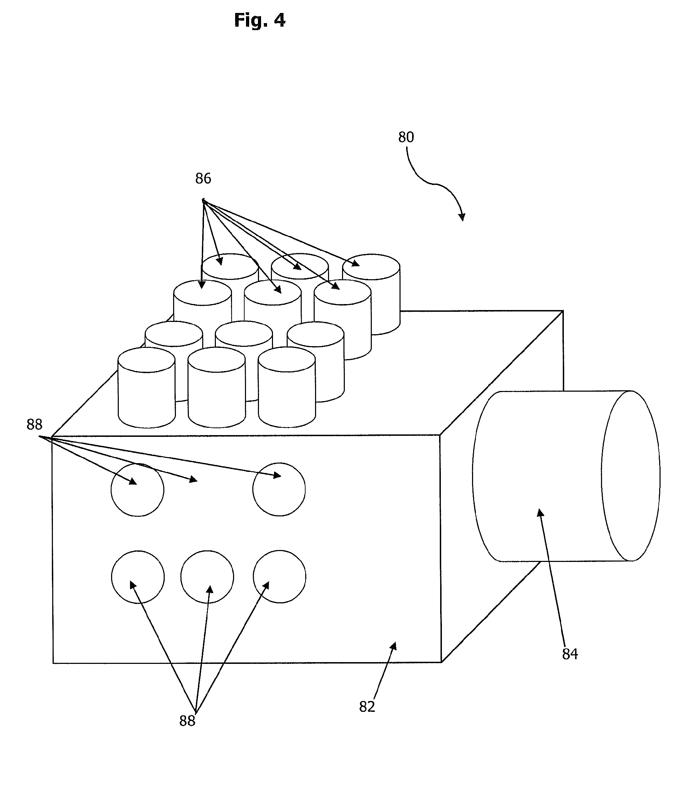

Die Fig. 4 ist eine schematische Darstellung eines Hydraulikaggregats 80. Das Hydraulikaggregat 80 umfasst einen Metallkörper 82, der zum Beispiel aus Aluminium gefertigt sein kann. Im Inneren des Metallkörper 82 sind zumindest die Koben der Pumpe 58, die Isolationsventile 42, 44, 46 und Druckabbauventile 54, 56 aufgenommen. In der Fig. 4 sind lediglich der Motor 84 der Pumpe 58 und die Spulenkörper 86 zum Betätigen der Ventile sichtbar. Zudem können in dem Hydraulikaggregat 80 weitere Elemente des in Verbindung mit Fig. 3 beschriebenen Bremskreis aufgenommen sein. Diese befinden sich allerdings im Inneren des Metallkörpers und sind daher nicht sichtbar.

Das in Fig. 4 dargestellte Hydraulikaggregat 80 umfasst ferner hydraulische Anschlüsse 88 an denen die Radbremsen 48, 50 und der Hauptbremszylinder 36 angeschlossen werden können. Zudem können in oder am Hydraulikaggregat 80 ein oder mehrere Zwischenspeicher 10 vorgesehen sein. Im Hydraulikaggregat 80 aufgenommenen Zwischenspeicher 10 können als Bohrung in dem Metallkörper 82 ausgeführt sein. Die Bohrung nimmt den Kolben 16, die erste und gegebenenfalls auch die zweite Feder 22, 24 auf. Die Bohrung kann verschlossen werden, wobei sich eine der Federn 22, 24 an dem Verschluss der Bohrung abstützen kann. Alternativ können an dem Hydraulikaggregat 80 auch Anschlüsse 88 für einen oder mehrere Zwischenspeicher 10 vorgesehen sein. Schließlich kann an dem Hydraulikaggregat 80 die Steuereinheit 68 angebracht sein.

Die vorrangehend beschriebenen Varianten des Bremssystems und des Zwischenspeichers 10 dienen lediglich dem besseren Verständnis der Struktur, der Funktionsweise und der Eigenschaften des Bremssystems und des Zwischenspeichers 10; sie schränken die Offenbarung nicht etwa auf die Ausführungsbeispiele ein. Die Figuren sind teilweise schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/ welche in den Figuren oder im Text offenbart ist/ sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen dem beschriebenen Bremssystem und Zwischenspeicher 10 zuzuschreiben sind. Dabei sind auch Kombinationen zwischen allen einzelnen Ausführungen im Text, das heißt in jedem Abschnitt der Beschreibung, in den Ansprüchen und auch Kombinationen zwischen unterschiedlichen Varianten im Text, in den Ansprüchen und den Figuren umfasst.

Auch die Ansprüche limitieren nicht die Offenbarung und damit die Kombinationsmöglichkeiten aller aufgezeigten Merkmale untereinander. Alle offenbarten Merkmale sind explizit sowohl einzeln als auch in Kombination mit allen anderen Merkmalen hier offenbart.

## Patentansprüche

1. Hydraulisches Bremssystem für ein Landfahrzeug, mit
zumindest einer einem Rad des Landfahrzeugs zugeordneten Radbremse (48, 50);
einem Hauptbremszylinder (36), der hydraulisch mit der zumindest einen Radbremse (48, 50) verbunden ist, wobei der Hauptbremszylinder (36) dazu eingerichtet ist, bei einer Betätigung des Bremssystems durch den Fahrer Hydraulikfluid in die zumindest eine Radbremse (48, 50) zu verschieben;
einer Pumpe (58), deren Ausgang hydraulisch mit der zumindest einen Radbremse (48, 50) verbunden ist und die Pumpe (58) dazu eingerichtet ist, Hydraulikfluid in die zumindest eine Radbremse (48, 50) zu verschieben;
einer Vielzahl von Ventilanordnungen (42, 44, 46, 54, 56, 60); **gekennzeichnet durch**:
eine Steuereinheit (68), die dazu eingerichtet ist, die Pumpe (58) und die Vielzahl der Ventilanordnungen (42, 44, 46, 54, 56, 60) anzusteuern und während des Betätigungszustands zumindest eine zwischen der zumindest einen Radbremse (48, 50) und dem Hauptbremszylinder (36) angeordnete erste Ventilanordnung (42, 44, 46) derart anzusteuern, dass die erste Ventilanordnung (42, 44, 46) eine Volumenverschiebung aus dem Hauptbremszylinder (36) in die zumindest eine Radbremse (48, 50) drosselt¹; und
einen Zwischenspeicher (10), der hydraulisch mit der zumindest einen Radbremse (48, 50) und einem Eingang der Pumpe (58) verbunden ist, wobei der Zwischenspeicher (10) ein Rückstellelement (16, 22) umfasst und dazu eingerichtet ist,
- während eines Ruhezustands des Bremssystems ein Hydraulikfluid-Reservevolumen aufzunehmen, und
- der Pumpe (58) das aufgenommene Hydraulikfluid-Reservevolumen während eines Betätigungszustands zum Verschieben in die zumindest eine Radbremse (48,50) bereitzustellen.
¹ Siehe ursprüngliche Ansprüche, Anspruch 5

2. Hydraulisches Bremssystem nach Anspruch 1,
wobei die Steuereinheit (68) dazu eingerichtet ist,
- während einer ersten Phase des Betätigungszustands der Vielzahl der Ventilanordnungen (42, 44, 46, 54, 56, 60) Schaltzustände vorzugeben, wobei die vorgegebenen Schaltzustände der Ventilanordnungen bewirken, dass ein erstes Hydraulikfluidvolumen aus der zumindest einen Radbremse (48, 50) in den Zwischenspeicher (10) verschoben wird; und/oder
- während einer zweiten Phase des Betätigungszustands der Vielzahl der Ventilanordnungen (42, 44, 46, 54, 56, 60) Schaltzustände und der Pumpe (58) ein Ansteuersignal vorzugeben, wobei das Ansteuersignal und die Schaltzustände bewirken, dass ein zweites Hydraulikfluidvolumen aus dem Zwischenspeicher (10) in die zumindest eine Radbremse (48, 50) verschoben wird, wobei das zweite Hydraulikfluidvolumen zumindest einen Teil des Hydraulikfluid-Reservevolumens umfasst.

3. Hydraulisches Bremssystem nach Anspruch 2,
wobei das zweite Hydraulikfluidvolumen größer als das erste Hydraulikfluidvolumen ist.

4. Hydraulisches Bremssystem nach Anspruch 2 oder 3, wobei die erste Phase die Anfangsphase einer Rekuperation und die zweite Phase die Endphase einer Rekuperation ist, und bei der Rekuperation eine elektrische Maschine (70) des Landfahrzeugs Bewegungsenergie des Landfahrzeugs in elektrische Energie umwandelt.

5. Hydraulisches Bremssystem nach Anspruch 1,
wobei die Steuereinheit (68) dazu eingerichtet ist, während einer ersten Phase des Betätigungszustands der Vielzahl der Ventilanordnungen (42, 44, 46, 54, 56, 60) Schaltzustände vorzugeben, wobei dem Fahrer über das Bremspedal (32) eine Pedalrückwirkung bereitgestellt wird, welche einer Pedalrückwirkung bei einem rein hydraulischen Bremsvorgang entspricht.²
² Siehe ursprüngliche Beschreibung Seite 4 unten bis Seite 5 oben

6. Hydraulisches Bremssystem nach einem der vorhergehenden Ansprüche, wobei das Rückstellelement einen den Zwischenspeicher (10) begrenzenden Kolben (16) und eine auf den Kolben (16) wirkende erste Feder (22) umfasst.

7. Hydraulisches Bremssystem nach Anspruch 6, wobei die erste Feder (22) derart angeordnet ist, dass die erste Feder (22) eine Rückstellkraft bewirkt, die einer Auslenkung des Kolbens (16) in einer ersten Richtung und einer Auslenkung des Kolbens (16) in einer zweiten Richtung entgegenwirkt.

8. Hydraulisches Bremssystem nach Anspruch 6, wobei das Rückstellelement ferner eine zweite Feder (24) umfasst, und wobei die erste und die zweite Feder (22, 24) derart angeordnet sind, dass die erste Feder (22) eine in eine erste Richtung gerichtete Rückstellkraft bewirkt und die zweite Feder (24) eine in eine zweite Richtung gerichtete Rückstellkraft bewirkt.

9. Hydraulisches Bremssystem nach einem der vorhergehenden Ansprüche, wobei das Hydraulikfluid-Reservevolumen größer als 0,5 cm³ ist, und vorzugsweise 1 cm³ ist.

10. Hydraulikaggregat, für ein in den vorhergehenden Ansprüchen definiertes Bremssystem, wobei dem Hydraulikaggregat die Pumpe, die Ventilanordnungen und der Zwischenspeicher zugeordnet sind.

11. Einen Zwischenspeicher (10) nach Anspruch 1, der hydraulisch mit der zumindest einen Radbremse (48, 50) und einem Eingang der Pumpe (58) verbunden ist, wobei der Zwischenspeicher (10) ein Rückstellelement umfasst und dazu eingerichtet ist, während eines Betätigungszustands des Bremssystems (30) ein HydraulikFluidvolumen aus zumindest einer der Radbremsen (48, 50) aufzunehmen.³
³ Siehe ursprüngliche Beschreibung S. 4, Absatz 2

## Claims

1. Hydraulic brake system for a land vehicle, comprising
at least one wheel brake (48, 50), which is assigned to a wheel of the land vehicle;
a master cylinder (36), which is hydraulically connected to the at least one wheel brake (48, 50), wherein the master cylinder (36) is adapted to displace hydraulic fluid into the at least one wheel brake (48, 50) when the brake system (30) is actuated by the driver;
a pump (58), the output of which is hydraulically connected to the at least one wheel brake (48, 50), and the pump (58) is adapted to displace hydraulic fluid into the at least one wheel brake (48, 50);
a plurality of valve arrangements (42, 44, 46, 54, 56, 60);
**characterized by**
a control unit (68) which is adapted to drive the pump (58) and the plurality of valve arrangements (42, 44, 46, 54, 56, 60) and, during the actuating state, to drive at least one first valve arrangement (42, 44, 46), arranged between the at least one wheel brake (48, 50) and the master cylinder (36), such that the first valve arrangement (42, 44, 46) throttles a volume displacement from the master cylinder (36) to the at least one wheel brake (48, 50); and
an accumulator (10), which is hydraulically connected to the at least one wheel brake (48, 50) and to an input of the pump (58), wherein the accumulator (10) includes a return element (16, 22) and is adapted to
- accommodate a hydraulic fluid reserve volume during a non-operating state of the brake system, and
- provide the accommodated hydraulic fluid reserve volume to the pump (58) for displacing it to the at least one wheel brake (48, 50) during an operating state.

2. Hydraulic brake system according to claim 1,
wherein the control unit (68) is adapted to
- predetermine switching states for the plurality of valve arrangements (42, 44, 46, 54, 56, 60) during a first phase of the actuation state, wherein the predetermined switching states of the valve arrangements have the effect that a first hydraulic fluid volume is displaced from the at least one wheel brake (48, 50) to the accumulator (10); and/or
- predetermine switching states for the plurality of valve arrangements (42, 44, 46, 54, 56, 60) and a drive signal for the pump (58) during a second phase of the actuating state, wherein the drive signal and the switching states have the effect of displacing a second hydraulic fluid volume from the accumulator (10) to the at least one wheel brake (48, 50), wherein the second hydraulic fluid volume comprises at least part of the hydraulic fluid reserve volume.

3. Hydraulic brake system according to claim 2,
wherein the second hydraulic fluid volume is greater than the first hydraulic fluid volume.

4. Hydraulic brake system according to claim 2 or 3,
wherein the first phase is the starting phase of regeneration and the second phase is the end phase of regeneration, and during regeneration an electrical machine (70) of the land vehicle converts kinetic energy of the land vehicle into electrical energy.

5. Hydraulic brake system according to claim 1,
wherein the control unit (68) is adapted to predetermine switching states for the plurality of valve arrangements (42, 44, 46, 54, 56, 60) during a first phase of the actuating state, wherein a pedal reaction, which corresponds to a pedal reaction in the case of a purely hydraulic braking procedure, is provided to the driver by way of the brake pedal (32).

6. Hydraulic brake system according to one of the preceding claims,
wherein the restoring element comprises a piston (16), which delimits the accumulator (10), and a first spring (22) acting on the piston (16).

7. Hydraulic brake system according to claim 6,
wherein the first spring (22) is arranged such that the first spring (22) exerts a restoring force which counters deflection of the piston (16) in a first direction and deflection of the piston (16) in a second direction.

8. Hydraulic brake system according to claim 6,
wherein the restoring element further comprises a second spring (24), and wherein the first and the second spring (22, 24) are arranged such that the first spring (22) brings about a restoring force in a first direction and the second spring (24) brings about a restoring force in a second direction.

9. Hydraulic brake system according to one of the preceding claims,
wherein the hydraulic fluid reserve volume is greater than 0.5 cm³, preferably 1 cm³.

10. Hydraulic unit for a brake system defined in the preceding claims, wherein the pump, the valve arrangements and the accumulator are assigned to the hydraulic unit.

11. Accumulator (10) according to claim 1, which is hydraulically connected to the at least one wheel brake (48, 50) and an input of the pump (58), wherein the accumulator (10) includes a restoring element and is adapted to take up a hydraulic fluid volume from at least one of the wheel brakes (48, 50) during an actuating state of the brake system (30).

## Revendications

1. Système de freinage hydraulique pour un véhicule terrestre, comportant
au moins un frein de roue (48, 50) associé à une roue du véhicule terrestre ;
un maître-cylindre de frein (36) qui est relié hydrauliquement audit au moins un frein de roue (48, 50), le maître-cylindre de frein (36) étant conçu pour déplacer du fluide hydraulique vers ledit au moins un frein de roue (48, 50) lors d'un actionnement du système de freinage par le conducteur ;
une pompe (58) dont la sortie est reliée hydrauliquement audit au moins un frein de roue (48, 50), ladite pompe (58) étant conçue pour déplacer du fluide hydraulique vers ledit au moins un frein de roue (48, 50) ;
une pluralité d'agencements de soupapes (42, 44, 46, 54, 56, 60) ;
**caractérisé par** :
une unité de commande (68) qui est conçue pour commander la pompe (58) et la pluralité d'agencements de soupapes (42, 44, 46, 54, 56, 60) et, pendant l'état d'actionnement, commander au moins un premier agencement de soupapes (42, 44, 46) disposé entre ledit au moins un frein de roue (48, 50) et le maître-cylindre de frein (36) de telle façon que le premier agencement de soupapes (42, 44, 46) réduise un déplacement de volume du maître-cylindre de frein (36) vers ledit au moins un frein de roue (48, 50) ; et
un réservoir intermédiaire (10) qui est relié hydrauliquement audit au moins un frein de roue (48, 50) et à une entrée de la pompe (58), le réservoir intermédiaire (10) comprenant un élément de rappel (16, 22) et étant conçu pour,
- pendant un état de repos du système de freinage, recevoir un volume de réserve de fluide hydraulique, et
- pendant un état d'actionnement, fournir à la pompe (58) le volume de réserve de fluide hydraulique reçu pour le déplacer vers ledit au moins un frein de roue (48, 50).

2. Système de freinage hydraulique selon la revendication 1,
dans lequel l'unité de commande (68) est conçue pour,
- pendant une première phase de l'état d'actionnement, prescrire à la pluralité d'agencements de soupapes (42, 44, 46, 54, 56, 60) des états de commutation, les états de commutation prescrits des agencements de soupapes ayant pour effet de déplacer un premier volume de fluide hydraulique dudit au moins un frein de roue (48, 50) vers le réservoir intermédiaire (10) ; et/ou
- pendant une deuxième phase de l'état d'actionnement, prescrire à la pluralité d'agencements de soupapes (42, 44, 46, 54, 56, 60) des états de commutation et à la pompe (58) un signal de commande, le signal de commande et les états de commutation ayant pour effet de déplacer un deuxième volume de fluide hydraulique du réservoir intermédiaire (10) vers ledit au moins un frein de roue (48, 50), le deuxième volume de fluide hydraulique comprenant au moins une partie du volume de réserve de fluide hydraulique.

3. Système de freinage hydraulique selon la revendication 2,
dans lequel le deuxième volume de fluide hydraulique est plus grand que le premier volume de fluide hydraulique.

4. Système de freinage hydraulique selon la revendication 2 ou 3,
dans lequel la première phase est la phase initiale d'une récupération et la deuxième phase est la phase finale d'une récupération, et, lors de la récupération, une machine électrique (70) du véhicule terrestre convertit l'énergie cinétique du véhicule terrestre en énergie électrique.

5. Système de freinage hydraulique selon la revendication 1,
dans lequel l'unité de commande (68) est conçue pour, pendant une première phase de l'état d'actionnement, prescrire à la pluralité d'agencements de soupapes (42, 44, 46, 54, 56, 60) des états de commutation, une réaction de pédale étant fournie au conducteur par la pédale de frein (32), laquelle réaction de pédale correspondant à une réaction de pédale lors d'un freinage purement hydraulique.

6. Système de freinage hydraulique selon l'une des revendications précédentes,
dans lequel l'élément de rappel comprend un piston (16) limitant le réservoir intermédiaire (10) et un premier ressort (22) agissant sur le piston (16).

7. Système de freinage hydraulique selon la revendication 6,
dans lequel le premier ressort (22) est disposé de telle façon que le premier ressort (22) produise une force de rappel qui s'oppose à une excursion du piston (16) dans un premier sens et à une excursion du piston (16) dans un deuxième sens.

8. Système de freinage hydraulique selon la revendication 6,
dans lequel l'élément de rappel comprend en outre un deuxième ressort (24), et dans lequel les premier et deuxième ressorts (22, 24) sont disposés de telle façon que le premier ressort (22) produise une force de rappel dirigée dans un premier sens et le deuxième ressort (24) produise une force de rappel dirigée dans un deuxième sens.

9. Système de freinage hydraulique selon l'une des revendications précédentes,
dans lequel le volume de réserve de fluide hydraulique est supérieur à 0,5 cm³ et de préférence égal à 1 cm³.

10. Groupe hydraulique pour un système de freinage tel que défini dans les revendications précédentes, dans lequel la pompe, les agencements de soupapes et le réservoir intermédiaire sont associés au groupe hydraulique.

11. Réservoir intermédiaire (10) selon la revendication 1, qui est relié hydrauliquement audit au moins un frein de roue (48, 50) et à une entrée de la pompe (58), dans lequel le réservoir intermédiaire (10) comprend un élément de rappel et est conçu pour, pendant un état d'actionnement du système de freinage (30), recevoir un volume de réserve de fluide hydraulique d'au moins un des freins de roue (48, 50).
